# FASCICULE DE BREVET EUROPEEN

(11) **EP 2 096 333 B1**
(45) Date de publication et mention de la délivrance du brevet: **15.09.2010**
(21) Numéro de dépôt: 09002254.2
(22) Date de dépôt: 18.02.2009
(51) Int. Cl.: F16H 61/688

(54) **Boîte de transmission de puissance présentant en sortie une vitesse de rotation modifiable et procédé de fonctionnement correspondant**
Schaltgetriebe und Verfahren zum Schalten des Schaltgetriebes
Shift transmission and method for shifting the shift transmission

(30) Priorité: 28.02.2008 FR 0801112
(43) Date de publication de la demande: 02.09.2009
(73) Titulaire: EUROCOPTER, 13725 Marignane Cédex (FR)
(72) Inventeur: Vialle, Michel, 13100 Aix en Provence (FR)
(74) Mandataire: GPI & Associés

(56) Documents cités:
- FR-A- 2 869 018
- FR-A- 2 871 138
- US-A1- 2006 269 414

## Description

La présente invention se rapporte au domaine technique général de la transmission mécanique et plus particulièrement aux mécanismes de transmission comportant un ou plusieurs étages de réduction.

La présente invention concerne plus particulièrement des boîtes de transmission de puissance, appelées également boîtes de transmission principales, pour giravions et notamment pour hélicoptères.

Dans le domaine des giravions, hélicoptères ou analogues, il est commun d'entraîner le rotor au moyen de plusieurs organes moteurs, en couple notamment. Le nombre de ces organes moteurs n'est cependant pas limitatif, quant à la portée de la présente invention.

L'entraînement des rotors d'un hélicoptère par des organes moteurs est effectué par l'intermédiaire d'un ou plusieurs étages de réduction présentant des rapports de réduction constants. Il en est ainsi pour l'entraînement en rotation de la voilure tournante ou plus précisément des pales.

On connaît dans l'état de la technique des systèmes avec lesquels une ou plusieurs vitesses de rotation des rotors sont accessibles pour un même régime de rotation du ou des organes moteurs. Ces systèmes nécessitent, pour obtenir une telle variation de la vitesse du rotor, de modifier de façon correspondante la vitesse de rotation du ou des organes moteurs et conduisent généralement à une perte temporaire de couple et de puissance.

Une variation du régime de rotation du rotor d'hélicoptères connus résulte donc d'une variation correspondante du régime de rotation des organes moteurs. L'obtention d'un écart de vitesse important s'avère donc impossible sans perte de couple transmis par les organes moteurs. Ceci constitue un inconvénient non négligeable tant sur le plan des performances que sur le plan de la sécurité de fonctionnement des hélicoptères.

On connaît par exemple par l'intermédiaire du document US 2006 02 69414, un dispositif permettant de réaliser une boîte de transmission principale, à vitesse variable et comportant des roues libres et des embrayages. Ces dispositifs souffrent cependant d'un certain nombre d'inconvénients. En effet, les embrayages, de par le glissement de leurs plateaux constitutifs qui viennent en contact mutuel, ne permettent pas une transmission instantanée de la puissance délivrée par un organe moteur. Il en résulte un instant où la chaîne de transmission de la vitesse de rotation vers la boîte de transmission principale (BTP) est rompue, le couple transmis étant alors nul. En outre, les embrayages sont confrontés à des problèmes d'usure et/ou de réglage, pouvant altérer la fiabilité et l'efficacité des dispositifs dans lesquels ils sont intégrés.

Ce document US 2006 0249474 divulgue une boîte de transmission de puissance selon le preambule de la revendication 1.

Les objets assignés à l'invention visent par conséquent à proposer une nouvelle boîte de transmission de puissance ne présentant pas les inconvénients cités et permettant de moduler de façon substantielle la vitesse de rotation du rotor tout en conservant de façon ininterrompue le couple transmis par les organes moteurs.

Un autre objet de l'invention vise à proposer une boîte de transmission de faible encombrement dont les éléments constitutifs sont simples à fabriquer, à assembler et à entretenir.

Un autre objet de l'invention vise à proposer une boîte de transmission de puissance fournissant des vitesses de rotation différentes au rotor pour une même vitesse de rotation initiale des organes moteurs.

Un autre objet de l'invention vise à proposer une boîte de transmission de puissance ne nécessitant pas des opérations de réglages complexes lors de l'assemblage et/ou de son utilisation.

Un autre objet de l'invention vise à proposer une boîte de transmission de puissance ne comportant pas de pièces d'usure précoce nécessitant un contrôle et/ou un remplacement fréquent.

Un autre objet de l'invention vise à proposer un procédé de commande permettant de modifier la vitesse de rotation de sortie d'une boîte de transmission de puissance, pour une même vitesse de rotation de l'arbre d'entrée, déterminée par des organes moteurs.

Un autre objet de l'invention vise à proposer un procédé de commande permettant de modifier la vitesse de rotation de sortie d'une boîte de transmission de puissance, en ne modifiant la vitesse de rotation de l'arbre d'entrée que momentanément au cours de la mise en oeuvre dudit procédé.

Les objets assignés à l'invention sont atteints à l'aide d'une boîte de transmission de puissance notamment pour giravions destinée à transmettre à partir d'au moins deux organes moteurs, un mouvement de rotation à un arbre principal selon des rapports de réduction déterminés, **caractérisée en ce qu**'elle présente au moins deux chaines de transmission pour impartir le mouvement de rotation à l'arbre principal, chacune des chaines de transmission comportant :
- un arbre d'entrée destiné à être entraîné en rotation par un organe moteur,
- au moins deux étages de réduction présentant un rapport de réduction différent,
- un premier pignon relié à l'arbre d'entrée par l'intermédiaire d'une roue libre décrabotable, ledit pignon étant en prise avec une première roue dentée solidaire d'un arbre intermédiaire, définissant ainsi au moins un premier étage de réduction,
- un second pignon relié à l'arbre d'entrée par l'intermédiaire d'une roue libre simple, ledit second pignon étant en prise avec une seconde roue dentée solidaire de l'arbre intermédiaire, définissant ainsi le second étage de réduction,
- une roue libre principale montée sur l'arbre intermédiaire et destinée à mettre en rotation une roue dentée complémentaire solidaire de l'arbre principal,
- et un mécanisme de crabotage de la roue libre décrabotable pour, selon le cas, mettre en prise l'arbre d'entrée avec ladite roue libre décrabotable ou pour isoler cinématiquement l'arbre d'entrée de ladite roue libre décrabotable.

Dans un exemple de réalisation d'un hélicoptère bimoteur, chacune des chaînes de transmission présente donc deux étages de réduction, dont le rapport de réduction est différent. La différence entre ces rapports de réduction détermine ainsi les deux vitesses de rotation possibles pour le rotor avec une même vitesse de rotation des organes moteurs.

Un avantage lié à la boîte de transmission conforme à l'invention réside dans l'obtention d'une variation importante des vitesses de rotation du rotor. Il est possible avec l'invention de faire varier la vitesse de rotation du rotor dans des proportions qui vont au-delà de ce que permettent les lois de régulation des moteurs.

Un autre avantage procuré par la boîte de transmission conforme à l'invention réside dans le fait qu'il n'y a pas de perte de puissance lors du passage d'une vitesse à une autre.

Un autre avantage obtenu par la présente invention est que la boîte de transmission principale (BTP) comporte un nombre réduit d'éléments constitutifs, diminuant par conséquent sa masse.

Un autre avantage de l'invention résulte dans l'utilisation de moyens simples. En effet, l'invention s'appuie sur le différentiel de rapport de réduction entre des couples d'engrenages et sur le différentiel de vitesse entre deux moteurs pour mettre le mécanisme de crabotage dans un état craboté ou non.

Un autre avantage est lié à possibilité de mettre en oeuvre la présente invention sur différents types d'appareils et notamment sur un hélicoptère trimoteur.

Par mécanisme de crabotage, il convient d'entendre tout système permettant à une roue libre d'être disposée dans un état en prise (crabotage) avec l'arbre sur lequel elle est montée ou d'être disposée dans un état isolé cinématiquement dudit arbre (décrabotage). Dans ce dernier cas de figure, l'arbre n'est plus en mesure, lors de sa rotation, d'entraîner la roue libre. Un exemple de mécanisme de crabotage, connu en tant que tel, ainsi que son fonctionnement sont décrits dans le document FR 2 871 138.

Par roue ou pignon solidaire d'un arbre, il convient d'entendre que ladite roue ou ledit pignon tourne avec ledit arbre en étant fixé intimement à ce dernier.

Selon un exemple de réalisation conforme à l'invention, le mécanisme de crabotage est monté sur l'arbre d'entrée.

Le mécanisme de crabotage est par exemple actionné par l'intermédiaire d'un vérin hydraulique. Le fonctionnement de ce vérin hydraulique est avantageusement piloté par des moyens électriques ou électroniques connus et non explicités dans la présente description.

Selon un exemple de réalisation, le mécanisme de crabotage comprend un mécanisme de solidarisation et de désolidarisation de l'arbre d'entrée avec un arbre de sortie concentrique au dit arbre d'entrée sur au moins une portion de sa longueur.

L'arbre principal est par exemple destiné à entraîner en rotation une voilure tournante ou un rotor supportant des pales.

Selon un exemple de réalisation conforme à l'invention, chaque chaine de transmission comporte n étages de réduction, une roue libre simple, une roue libre principale et n-1 roues libres décrabotables, n étant le nombre de vitesses accessibles, à savoir un nombre entier supérieur ou égal à 2.

Il est ainsi envisageable, lorsque n=2, de disposer, dans chaque chaine de transmission de deux chaînes cinématiques distinctes, avec des rapports de réduction différents, définissant ainsi deux vitesses de rotation accessibles pour le rotor avec le même régime de rotation des organes moteurs.

Les objets assignés à l'invention sont également atteints à l'aide d'un procédé de commande pour modifier la vitesse de rotation d'un arbre principal d'une boîte de transmission de puissance consistant :
- j1) à diminuer la vitesse de rotation de l'organe moteur gauche jusqu'à une valeur Ne1 en partant d'une valeur Ne, tout en conservant la valeur Ne pour la vitesse de rotation de l'organe moteur droit,
- j2) à décraboter la roue libre décrabotable de la chaîne de transmission gauche,
- j3) à augmenter la vitesse de rotation de l'organe moteur gauche jusqu'à la valeur Ne et maintenir ladite vitesse de rotation constante,
- j4) à diminuer la vitesse de rotation de l'organe moteur droit jusqu'à une valeur inférieure à Ne, par exemple égale à Ne1,
- j5) à décraboter la roue libre décrabotable de la chaîne de transmission droite,
- j6) et à augmenter la vitesse de rotation de l'organe moteur droit jusqu'à la valeur Ne.

Les objets assignés à l'invention sont également atteints à l'aide d'un procédé de commande pour modifier la vitesse de rotation d'un arbre principal d'une boîte de transmission de puissance consistant :
- i1) à diminuer la vitesse de rotation de l'organe moteur gauche jusqu'à une valeur Ne1 en partant d'une valeur Ne, tout en conservant la valeur Ne pour la vitesse de rotation de l'organe moteur droit,
- i2) à décraboter la roue libre décrabotable de la chaîne de transmission gauche,
- i3) à augmenter la vitesse de rotation de l'organe moteur gauche jusqu'à une valeur Ne2, supérieure à la valeur Ne,
- i4) à décraboter la roue libre décrabotable de la chaîne de transmission droite,
- i5) et à diminuer la vitesse de rotation de l'organe moteur gauche jusqu'à la valeur Ne.

Le procédé de commande conforme à l'invention présente l'avantage d'être extrêmement simple à mettre en oeuvre dans la mesure où il se base principalement sur des différentiels de vitesse entre des éléments des deux chaînes de transmission gauche et droite.

Un autre avantage de l'invention réside dans le fonctionnement des organes moteurs qui conservent un régime de rotation constant ou retrouvent leur régime de rotation initial à l'issue des phases successives illustrant la modification la vitesse de rotation de l'arbre principal

Selon un exemple de mise en oeuvre conforme à l'invention, le procédé de commande, consiste à mettre en oeuvre les étapes j1) à j6) ou i1) à i5) à l'aide d'un ordinateur.

Les objets assignés à l'invention sont également atteints à l'aide d'un ensemble de motorisation d'un giravion, du genre hélicoptère, comportant une boîte de transmission de puissance telle que présentée ci-dessus et un organe moteur distinct, du genre turbomoteur ou moteur à pistons, associé à chacune des chaines de transmission.

Les objets assignés à l'invention sont également atteints à l'aide d'un hélicoptère ou d'un giravion comportant une boîte de transmission de puissance telle que présentée ci-dessus.

D'autres particularités et avantages de l'invention apparaîtront plus en détails à la lecture de la description qui suit, ainsi qu'à l'aide du dessin annexé donné à titre purement illustratif et non limitatif, dans lequel :

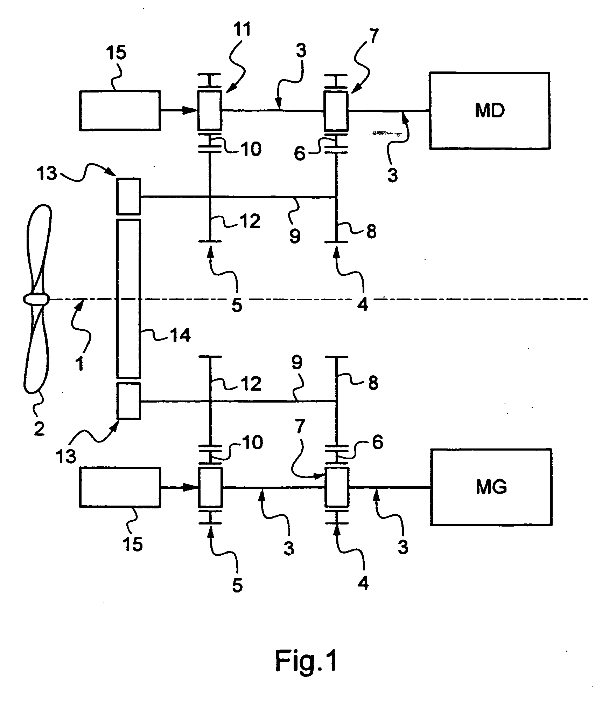

- la figure 1 illustre de façon schématique un mode de réalisation d'une boîte de transmission de puissance conforme à l'invention ;

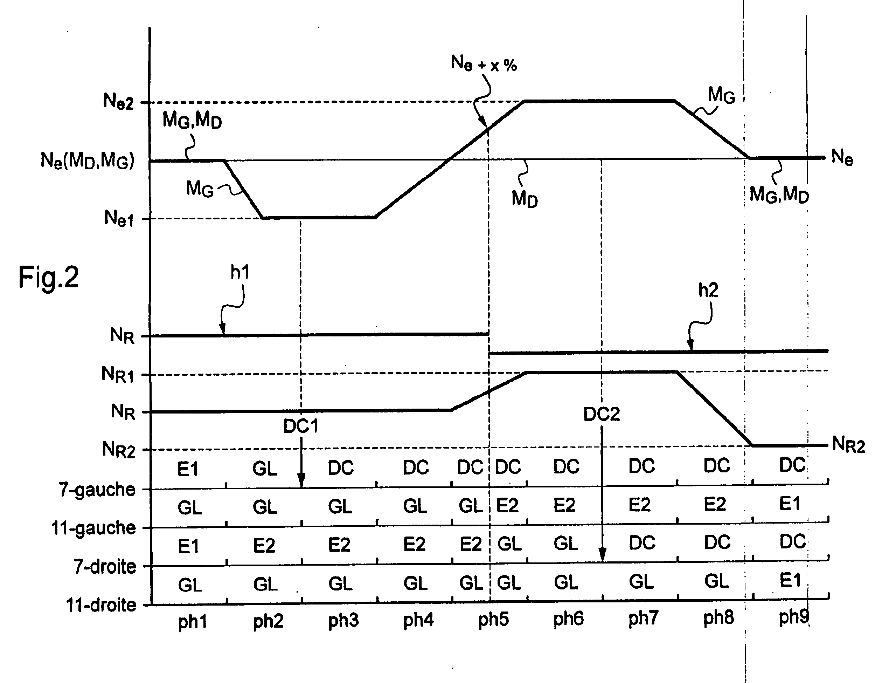

- la figure 2 illustre schématiquement d'une part les différentes phases du procédé de commande conforme à l'invention, permettant de changer la vitesse de rotation de l'arbre principal d'une boîte de transmission de puissance conforme à l'invention et d'autre part les différents états de fonctionnement des roues libres de chaque chaîne de transmission au cours desdites phases ;

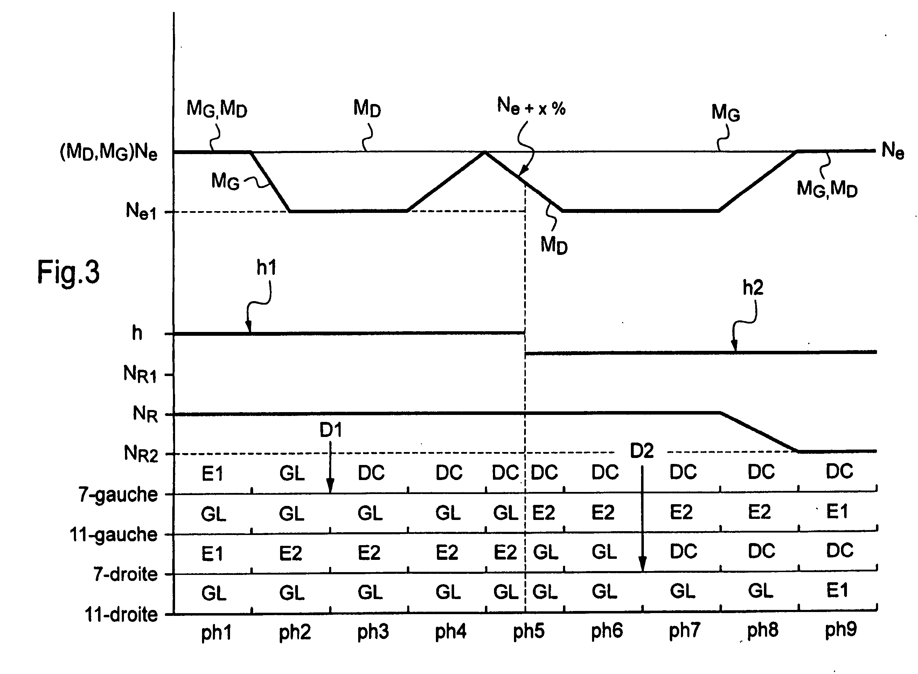

- et la figure 3 illustre schématiquement d'une part les différentes phases d'un autre exemple de mise en oeuvre du procédé de commande conforme à l'invention, permettant de changer la vitesse de rotation de l'arbre principal d'une boîte de transmission puissance conforme à l'invention et d'autre part les différents états de fonctionnement des roues libres de chaque chaîne de transmission au cours desdites phases.

La figure 1 illustre schématiquement l'agencement d'une boîte de transmission de puissance conforme à l'invention entre des organes moteurs MG, MD et un arbre principal 1 entraînant un rotor (non représenté) ou des pales 2.

L'exemple représenté comporte deux chaînes de transmission associées chacune à un organe moteur MG ou MD. La boîte de transmission ainsi schématisée est destinée par exemple à un hélicoptère bimoteur dont les organes moteurs MG, MD sont du genre turbomoteur ou moteur à pistons.

La boîte de transmission comporte donc deux chaînes de transmission, gauche G et droite D, incorporant chacune des étages de réduction 4 et 5.

Chacune des chaînes de transmission comporte un arbre d'entrée 3 destiné à être entraîné par l'organe moteur MG ou MD correspondant.

Chacune des chaînes de transmission comporte deux étages de réduction 4 et 5 présentant des rapports de réduction k1 et k2 différents.

Chacune des chaînes de transmission comporte également un premier pignon 6 relié à l'arbre d'entrée 3 par l'intermédiaire d'une roue libre décrabotable 7. Le premier pignon 6 est en prise avec une première roue dentée 8 solidaire d'un arbre intermédiaire 9, définissant ainsi le premier étage de réduction 4.

Un second pignon 10 est relié à l'arbre d'entrée 3 par l'intermédiaire d'une roue libre simple 11. Le second pignon 10 est en prise avec une seconde roue dentée 12, solidaire de l'arbre intermédiaire 9, définissant ainsi le second étage de réduction 5.

Une roue libre principale 13, montée sur l'arbre intermédiaire 9 est destinée à mettre en rotation une roue dentée complémentaire 14 solidaire de l'arbre principal 1.

Chacune des chaînes de transmission comporte également un mécanisme de crabotage de la roue libre décrabotable 7 pour mettre en prise l'arbre d'entrée 3 avec ladite roue libre décrabotable 7 d'une part ou pour isoler cinématiquement l'arbre d'entrée 3 de ladite roue libre décrabotable 7 d'autre part.

Un mécanisme de crabotage, non représenté, est avantageusement monté sur l'arbre d'entrée 3. Le mécanisme de crabotage est de préférence actionné par l'intermédiaire d'un vérin hydraulique 15. Le mécanisme de crabotage comprend un mécanisme de solidarisation et de désolidarisation de l'arbre d'entrée 3 avec un arbre de sortie, concentrique au dit arbre d'entrée 3 sur au moins une portion de sa longueur.

L'arbre principal 1 est par exemple destiné à entraîner en rotation les pales 2 d'un rotor, ou celles d'une voilure tournante non représentée.

Dans la suite de la description, les éléments constitutifs des deux chaînes de transmission sont différenciés par l'adjonction du terme « gauche» ou « droit » selon leur appartenance à la chaîne de transmission illustrée en partie haute ou en partie basse de la figure 1. Il en est de même pour les autres éléments constitutifs des chaînes de transmission. Ces derniers se voient selon le cas également attribuer la référence G (gauche) ou D (droite). L'une (en partie haute) des chaînes de transmission est donc associée à l'organe moteur droit MD et l'autre chaîne de transmission (partie basse) est associée à l'organe moteur gauche MG.

Le fonctionnement de la boîte de transmission de puissance conforme à l'invention est maintenant présenté plus en détails. Ce fonctionnement est illustré par une succession de phases de fonctionnement correspondant à des états de fonctionnement des différents éléments constitutifs de la boîte de transmission de puissance. La mise en oeuvre de l'ensemble de ces phases de fonctionnement permet de modifier la vitesse de rotation du rotor (arbre principal) conformément à l'invention et sera décrite ci-après à l'aide d'étapes d'un procédé de commande.

Dans la suite de la description basée sur les figures 2 et 3, les états de fonctionnement des roues libres sont identifiés de la manière suivante :
- DC pour roue libre décrabotée ;
- GL pour roue libre glissante ;
- E1 pour roue libre entraînante avec transmission d'une puissance Pa,
- E2 pour roue libre entraînante avec transmission d'une puissance 2Pa.

Lors de la première phase ph1, les deux organes moteurs MG et MD tournent à une vitesse de rotation identique Ne et entraînent l'arbre principal 1 à une vitesse initiale Nr. La puissance transmise à l'arbre principal 1 par chacun des organes moteurs MG, MD et par l'intermédiaire des premiers étages de réduction 4, est identique et égale à Pa.

Le rotor, solidaire de l'arbre principal 1, est entraîné en rotation par une chaîne cinématique gauche G et droite D, comportant chacune le premier pignon 6, la roue dentée 8 et la roue libre décrabotable 7. Cette dernière se trouve dans un état de crabotage avec l'arbre d'entrée 3 et la roue libre simple 11 glisse sur l'arbre d'entrée 3, grâce à un rapport de réduction k2 adéquat du second étage de réduction 5 par rapport au premier étage de réduction 4. Le rapport de réduction k1 est appliqué à l'arbre intermédiaire 9. Le second étage de réduction 5 permet, lorsqu'il est dans un état d'entraînement, d'impartir à l'arbre intermédiaire 9. une vitesse de rotation plus faible que le premier étage de réduction 4, et ce avec une vitesse de rotation identique Ne des organes moteurs MD,MG. Les roues libres décrabotables 7 sont dans un état d'entraînement E1 et les roues libres simples 11 sont dans un état glissant GL.

Lors de la seconde phase ph2 de fonctionnement, la vitesse de rotation de l'organe moteur gauche MG diminue et la puissance 2Pa nécessaire au rotor est transmise intégralement par l'intermédiaire de l'organe moteur droit MD et du premier étage de réduction 4. Ceci provient du fait que la roue libre décrabotable 7 gauche se met à glisser sur l'arbre d'entrée 3.

L'étape i1) du procédé de commande consiste donc à diminuer la vitesse de rotation de l'organe moteur gauche MG jusqu'à une valeur Ne1 en partant de Ne, tout en conservant la valeur Ne pour la vitesse de rotation de l'organe moteur droit MD. L'état de fonctionnement de la roue libre décrabotable 7 gauche se transforme donc dans un état glissant GL.

La chaîne de transmission gauche G se trouve ainsi déchargée et une action du vérin hydraulique 15 gauche permet de décraboter la roue libre décrabotable 7 gauche. Cette dernière se trouve ainsi isolée cinématiquement de l'arbre d'entrée 3. L'étape i2) consiste donc à décraboter (DC1) la roue libre décrabotable 7 de la chaîne de transmission gauche G. La roue libre décrabotable 7 gauche se trouve par conséquent dans un état de fonctionnement décraboté DC lors de la troisième phase de fonctionnement ph3.

Lors de la quatrième phase de fonctionnement ph4, la vitesse de rotation de l'organe moteur gauche MG augmente à nouveau jusqu'à la valeur Ne. Les états de fonctionnement des roues libres restent inchangés.

Lors de la cinquième phase de fonctionnement ph5, la vitesse de rotation de l'organe moteur gauche MG augmente jusqu'à une valeur Ne2. Lors de cette phase ph5, dès l'atteinte d'une valeur Ne+x%, supérieure à Ne et inférieure à Ne2, la roue libre décrabotable 7 droite passe à un état de fonctionnement glissant GL et la roue libre simple 11 gauche passe dans un état de fonctionnement d'entraînement E2, pour transmettre intégralement la puissance 2Pa par l'intermédiaire de l'organe moteur gauche MG et du second étage de réduction 5, alors que la chaîne de transmission droite D se trouve délestée. La chaine cinématique active est celle de gauche comportant notamment le second pignon 10 gauche, la seconde roue dentée 12 gauche et la roue libre simple 11 gauche, correspondant au second étage de réduction 5 gauche G. L'étape i3) consiste donc à augmenter la vitesse de rotation de l'organe moteur gauche MG jusqu'à la valeur Ne2, supérieure à Ne.

L'écart entre les valeurs Ne+x% et Ne2 permet d'assurer un différentiel de vitesse suffisant pour effectuer, par l'intermédiaire du vérin hydraulique 15, le décrabotage (DC2) de la roue libre décrabotable 7 droite lors de la sixième phase de fonctionnement ph6. Notamment durant cette phase ph6, la vitesse de rotation Nr du rotor est portée à une valeur Nr1, supérieure à Nr. Les états de fonctionnement des roues libres restent inchangés. L'étape i4) consiste donc à décraboter la roue libre décrabotable 7 de la chaîne de transmission droite D. La roue libre décrabotable 7 droite, se trouve donc dans un état de fonctionnement décraboté DC, illustrant ainsi la septième phase de fonctionnement ph7.

Le taux d'augmentation de la vitesse de rotation de l'organe moteur gauche MG est identique au taux d'augmentation de la vitesse de rotation de l'arbre intermédiaire 9, et par conséquent du rotor entraîné par le second étage de réduction 5. Dans le présent cas, k2 est supérieur à k1.

Le régime de rotation de l'organe moteur gauche MG diminue ensuite au cours de la phase de fonctionnement ph8, pour atteindre sa valeur initiale Ne à la phase de fonctionnement ph9, en permettant ainsi à la roue libre simple 11 droite d'être entraînée par l'arbre d'entrée 3. L'étape i5) consiste donc à diminuer la vitesse de rotation de l'organe moteur gauche MG jusqu'à la valeur Ne au cours de la phase ph8. Au cours de cette phase ph8, la vitesse de rotation du rotor passe d'une valeur Nr1 à une valeur Nr2, inférieure à Nr1 et déterminée par le rapport de réduction k2 du second étage de réduction 5.

Les deux organes moteurs gauche MG et droit MD transmettent alors chacun une puissance égale à Pa, au rotor et ce, via les seconds étages de réduction 5 respectifs.

Les deux organes moteurs MG et MD tournent à nouveau à leur vitesse de rotation initiale Ne et les arbres intermédiaires 9 tournent à une vitesse déterminée par le rapport d'engrènement k2 des seconds étages de réduction 5, correspondant aux deuxièmes chaînes cinématiques gauche et droite.

En passant de la phase ph8 à la phase ph9, les états de fonctionnement des roues libres simple 11 droite et simple 11 gauche, passent respectivement d'un état de glissement GL à un état d'entraînement E1 et d'un état d'entraînement E2 à un état d'entraînement E1.

Les étapes successives ainsi présentées du procédé de commande, peuvent être mises en oeuvre en sens inverse, sans sortir du cadre de la présente invention, pour revenir à la vitesse initiale Nr du rotor.

Une variante de mise en oeuvre du procédé de commande conforme à l'invention est illustrée à la figure 3. Les étapes j1) et j2) sont identiques aux étapes i1) et i2). Les étapes j3) à j6) remplacent les étapes i3) à i5).

L'étape j3) consiste à augmenter la vitesse de rotation de l'organe moteur gauche MG jusqu'à une valeur Ne et maintenir ladite vitesse de rotation constante.

L'étape j4) consiste à diminuer la vitesse de rotation de l'organe moteur droit MD jusqu'à une valeur inférieure à Ne, par exemple égale à Ne1.

L'étape j5) consiste à décraboter (DC2) la roue libre décrabotable 7 de la chaîne de transmission droite D et l'étape j6) consiste à augmenter la vitesse de rotation de l'organe moteur droit MD, jusqu'à la valeur Ne.

Les états de fonctionnement des roues libres lors des phases ph1 à ph9 restent inchangées par rapport à l'exemple de mise en oeuvre illustré à la figure 2. En revanche, la vitesse de rotation Nr du rotor n'est pas momentanément augmentée au cours du changement de vitesse mis en oeuvre par cette variante d'exécution du procédé de commande conforme à l'invention. Ceci peut présenter des avantages, par exemple pour une boîte de transmission de puissance d'un hélicoptère, dans des conditions particulières de vol ou de fonctionnement.

Les étapes successives ainsi présentées dans cette variante de mise en oeuvre du procédé de commande peuvent également être mises en oeuvre en sens inverse, sans sortir du cadre de la présente invention, pour revenir à la vitesse initiale Nr du rotor.

Le choix du mode d'exécution du procédé de commande conforme à l'invention est avantageusement déterminé par un ordinateur.

Il est possible d'envisager une généralisation dans la conception des boîtes de transmission conformes à l'invention. Selon cette généralisation, chaque chaîne de transmission comporte n étages de réduction, une roue libre simple 11, une roue libre principale 13 et n-1 roues libres décrabotables 7, n étant un nombre entier supérieur ou égal à 2 et correspondant au nombre de vitesses de sortie accessibles.

Pour disposer d'une boîte de transmission à deux vitesses accessibles, chaque chaîne de transmission comporte donc une roue libre décrabotable, une roue libre simple et une roue libre principale comme le montre la figure 1.

Avec un même nombre de moteurs, on peut ainsi augmenter le nombre de vitesses accessibles en augmentant le nombre d'étages de réduction (4).

Dans un autre exemple de réalisation conforme à l'invention, on peut utiliser trois moteurs pour réaliser trois chaînes de transmission tout en conservant deux vitesses accessibles de sortie. Le nombre de moteurs utilisés n'impose pas, le nombre de vitesses accessibles.

À titre d'exemple, pour n égal à 3, la boîte de transmission comporte deux étages de réduction, une roue libre simple 11, une roue libre principale 13 et deux roues libres décrabotables 7. Une telle boîte de transmission permet d'accéder à deux vitesses de rotation différentes pour le rotor, avec une même vitesse de rotation des organes moteurs MG et MD.

En outre, le passage d'une vitesse de rotation à une autre conformément à l'invention, ne conduit pas à une perte de puissance transmise vers le rotor.

La présente invention est mise en oeuvre avec des moteurs ou des groupes moteurs dits « turbomoteurs » ainsi qu'avec des moteurs à pistons.

## Revendications

1. Boîte de transmission de puissance pour giravions destinée à transmettre à partir d'au moins deux organes moteurs (MG, MD), un mouvement de rotation à un arbre principal (1) selon des rapports de réduction déterminés,
**caractérisée en ce qu'**elle présente au moins deux chaines de transmission (G, D) pour impartir le mouvement de rotation à l'arbre principal (1), chacune des chaines de transmission comportant :
- un arbre d'entrée (3) destiné à être entraîné en rotation par un organe moteur (MG, MD),
- au moins deux étages de réduction (4, 5) présentant un rapport de réduction différent (k1, k2),
- un premier pignon (6) relié à l'arbre d'entrée (3) par l'intermédiaire d'une roue libre décrabotable (7), ledit pignon (6) étant en prise avec une première roue dentée (8) solidaire d'un arbre intermédiaire (9), définissant ainsi au moins un premier étage de réduction (4),
- un second pignon (10) relié à l'arbre d'entrée (3) par l'intermédiaire d'une roue libre simple (11), ledit second pignon (10) étant en prise avec une seconde roue dentée (12) solidaire de l'arbre intermédiaire (9), définissant ainsi le second étage de réduction (5),
- une roue libre principale (13) montée sur l'arbre intermédiaire (9) et destinée à mettre en rotation une roue dentée complémentaire (14) solidaire de l'arbre principal (1),
- et un mécanisme de crabotage de la roue libre décrabotable (7) pour, selon le cas, mettre en prise l'arbre d'entrée (3) avec ladite roue libre décrabotable (7) ou pour isoler cinématiquement l'arbre d'entrée (3) de ladite roue libre décrabotable (7).

2. Boîte de transmission de puissance selon la revendication 1,
**caractérisée en ce que** le mécanisme de crabotage est monté sur l'arbre d'entrée (3).

3. Boîte de transmission de puissance selon la revendication 1 ou 2,
**caractérisée en ce que** le mécanisme de crabotage est actionné par l'intermédiaire d'un vérin hydraulique (15).

4. Boîte de transmission de puissance selon la revendication 3,
**caractérisée en ce que** le mécanisme de crabotage comprend un mécanisme de solidarisation et de désolidarisation de l'arbre d'entrée (3) avec un arbre de sortie concentrique au dit arbre d'entrée sur au moins une portion de sa longueur.

5. Boîte de transmission de puissance selon l'une quelconque des revendications 1 à 4,
**caractérisée en ce que** l'arbre principal (1) est destiné à entraîner en rotation une voilure tournante ou au moins un rotor supportant par exemple des pales (2).

6. Boîte de transmission de puissance selon l'une quelconque des revendications 1 à 5,
**caractérisée en ce que** chaque chaine de transmission comporte n étages de réduction, une roue libre simple (11), une roue libre principale (13) et n-1 roues libres décrabotables (7), n étant le nombre de vitesses accessibles, à savoir un nombre entier supérieur ou égal à 2.

7. Procédé de commande pour modifier la vitesse de rotation d'un arbre principal d'une boîte de transmission de puissance conforme à l'une quelconque des revendications 1 à 6,
**caractérisé en ce qu'**il consiste :
- j1) à diminuer la vitesse de rotation de l'organe moteur gauche (MG) jusqu'à une valeur Ne1 en partant d'une valeur Ne, tout en conservant la valeur Ne pour la vitesse de rotation de l'organe moteur droit (MD),
- j2) à décraboter la roue libre décrabotable (7) de la chaîne de transmission gauche (G),
- j3) à augmenter la vitesse de rotation de l'organe moteur gauche (MG) jusqu'à la valeur Ne et maintenir ladite vitesse de rotation constante,
- j4) à diminuer la vitesse de rotation de l'organe moteur droit (MD) jusqu'à une valeur inférieure à Ne, par exemple égale à Ne1,
- j5) à décraboter la roue libre décrabotable (7) de la chaîne de transmission droite (D),
- j6) et à augmenter la vitesse de rotation de l'organe moteur droit (MD) jusqu'à la valeur Ne.

8. Procédé de commande pour modifier la vitesse de rotation d'un arbre principal d'une boîte de transmission de puissance conforme à l'une quelconque des revendications 1 à 6,
**caractérisé en ce qu'**il consiste :
- i1) à diminuer la vitesse de rotation de l'organe moteur gauche (MG) jusqu'à une valeur Ne1 en partant d'une valeur Ne, tout en conservant la valeur Ne pour la vitesse de rotation de l'organe moteur droit (MD),
- i2) à décraboter la roue libre décrabotable (7) de la chaîne de transmission gauche (G),
- i3) à augmenter la vitesse de rotation de l'organe moteur gauche (MG) jusqu'à une valeur Ne2, supérieure à la valeur Ne,
- i4) à décraboter la roue libre décrabotable (7) de la chaîne de transmission droite (D),
- i5) et à diminuer la vitesse de rotation de l'organe moteur gauche (MG) jusqu'à la valeur Ne.

9. Procédé de commande selon la revendication 7 ou 8,
**caractérisé en ce qu'**il consiste à mettre en oeuvre les étapes j1) à j6) ou i1) à i5) à l'aide d'un ordinateur.

10. Ensemble de motorisation d'un giravion, du genre hélicoptère, comportant une boîte de transmission de puissance conforme à l'une quelconque des revendications 1 à 6 et un organe moteur (MG, MD) du genre turbomoteur ou moteur à pistons, associé à chacune des chaines de transmission.

11. Hélicoptère ou giravion comportant une boîte de transmission de puissance conforme à l'une quelconque des revendications 1 à 6.

12. Hélicoptère ou giravion comportant un ensemble de motorisation selon la revendication 10.

## Claims

1. A power transmission gearbox for rotorcraft which is intended to transmit a rotary movement from at least two driving members (MG, MD) to a main shaft (1) at given reduction ratios,
**characterised in that** it has at least two transmission chains (G, D) for imparting the rotary mouvement to the main shaft (1), each of the transmission chains comprising:
- an input shaft (3) intended to be driven in rotation by a driving member (MG, MD),
- at least two reduction stages (4, 5) having different reduction ratios (k1, k2),
- a first pinion (6) connected to the input shaft (3) by means of a declutchable free wheel (7), said pinion (6) meshing with a first toothed wheel (8) integral with an intermediate shaft (9), thus defining at least a first reduction stage (4),
- a second pinion (10) connected to the input shaft (3) by means of a simple free wheel (11), said second pinion (10) meshing with a second toothed wheel (12) integral with the intermediate shaft (9), thus defining the second reduction stage (5),
- a main free wheel (13) mounted on the intermediate shaft (9) and intended to drive in rotation a complementary toothed wheel (14) integral with the main shaft (1),
- and a clutch mechanism for the declutchable free wheel (7) in order, according to the case, to mesh the input shaft (3) with said declutchable free wheel (7) or for kinematically isolating the input shaft (3) from said declutchable free wheel (7).

2. A power transmission gearbox according to Claim 1, **characterised in that** the clutch mechanism is mounted on the input shaft (3).

3. A power transmission gearbox according to Claim 1 or 2, **characterised in that** the clutch mechanism is actuated by means of a hydraulic actuator (15).

4. A power transmission gearbox according to Claim 3, **characterised in that** the clutch mechanism comprises a mechanism for connecting and disconnecting the input shaft (3) to/from an output shaft concentric to said input shaft over at least a portion of its length.

5. A power transmission gearbox according to any one of Claims 1 to 4, **characterised in that** the main shaft (1) is intended to drive in rotation a rotary wing or at least one rotor supporting for example blades (2).

6. A power transmission gearbox according to any one of Claims 1 to 5, **characterised in that** each transmission chain comprises n reduction stages, a simple free wheel (11), a main free wheel (13) and n-1 declutchable free wheels (7), n being the number of gears accessible, namely an integer greater than or equal to 2.

7. A control method for modifying the speed of rotation of a main shaft of a power transmission gearbox in accordance with any one of Claims 1 to 6,
**characterised in that** it consists of:
- j 1) reducing the speed of rotation of the left-hand driving member (MG) to a value Ne1 starting from a value Ne, while retaining the value Ne for the speed of rotation of the right-hand driving member (MD),
- j2) declutching the declutchable free wheel (7) from the left-hand transmission chain (G),
- j3) increasing the speed of rotation of the left-hand driving member (MG) to the value Ne and keeping said speed of rotation constant,
- j4) reducing the speed of rotation of the right-hand driving member (MD) to a value less than Ne, for example equal to Ne1,
- j5) declutching the declutchable free wheel (7) from the right-hand transmission chain (D),
- j6) and increasing the speed of rotation of the right-hand driving member (MD) to the value Ne.

8. A control method for modifying the speed of rotation of a main shaft of a power transmission gearbox in accordance with any one of Claims I to 6,
**characterised in that** it consists of:
- i1) reducing the speed of rotation of the left-hand driving member (MG) to a value Ne1 starting from a value Ne, while retaining the value Ne for the speed of rotation of the right-hand driving member (MD),
- i2) declutching the declutchable free wheel (7) from the left-hand transmission chain (G),
- i3) increasing the speed of rotation of the left-hand driving member (MG) to a value Ne2, greater than the value Ne,
- i4) declutching the declutchable free wheel (7) from the right-haud transmission chain (D),
- i5) and reducing the speed of rotation of the left-hand driving member (MG) to the value Ne.

9. A control method according to Claim 7 or 8, **characterised in that** it consists of implementing steps j1) to j6) or i1) to i5) with the aid of a computer.

10. A motor-driving assembly for a rotorcraft, of the helicopter type, comprising a power transmission gearbox in accordance with any one of Claims 1 to 6 and a driving member (MG, MD) of the turbine engine or piston engine type, associated with each of the transmission chains.

11. A helicopter or rotorcraft comprising a power transmission gearbox in accordance with any one of Claims 1 to 6.

12. A helicopter or rotorcraft comprising a motor-driving assembly according to Claim 10.

## Patentansprüche

1. Schaltgetriebe für Drehflügelflugzeuge zum Übertragen einer Drehbewegung ausgehend von mindestens zwei Antriebsorganen (MG, MD) auf eine Hauptwelle (1) mit vorbestimmten Reduktionsverhältnissen,
**dadurch gekennzeichnet, dass** das Schaltgetriebe mindestens zwei Übertragungszüge (G, D) aufweist, um die Drehbewegung auf die Hauptwelle (1) zu übertragen, wobei jeder der Übertragungszüge aufweist:
- eine Eingangswelle (3), die dazu bestimmt ist von einem Antriebsorgan
(MG, MD) in eine Drehbewegung versetzt zu werden,
- mindestens zwei Reduktionsstufen (4, 5), die verschiedene Reduktionsverhältnisse (k1, k2) aufweisen,
- ein erstes Getrieberad (6), welches über ein freies abnehmbares Rad (7) mit einer Eingangswelle (3) verbunden ist, wobei das Getrieberad (6) mit einem ersten Zahnrad (8) in Eingriff steht, welches mit einer Zwischenwelle (9) fest verbunden ist, und somit mindestens eine erste Reduktionsstufe (4) definiert,
- ein zweites Getrieberad (10), welches über ein einfaches freies Rad (11) mit der Eingangswelle (3) verbunden ist, wobei das zweite Getrieberad (10) mit einem zweiten Zahnrad (12) in Eingriff steht, welches mit der Zwischenwelle (9) fest verbunden ist und somit die zweite Reduktionsstufe (5) definiert,
- ein freies Hauptrad (13), welches auf der Zwischenwelle (9) montiert ist und
dazu bestimmt ist ein komplementäres Zahnrad (14) in eine Drehbewegung zu versetzen, welches mit der Hauptwelle (1) fest verbunden ist, und
- ein Einkuppelmechanismus des freien auskuppelbaren Rades (7), um je nach gegebenen Fall die Eingangswelle (3) mit dem freien auskuppelbaren Rad (7) in Eingriff zu bringen, oder um kinematisch die Eingangswelle (3) des freien auskuppelbaren Rads (7) zu isolieren.

2. Schaltgetriebe nach Anspruch 1,
**dadurch gekennzeichnet, dass** der Einklinkmechanismus auf der Eingangswelle (3) montiert ist.

3. Schaltgetriebe nach Anspruch 1 oder 2,
**dadurch gekennzeichnet, dass** der Einklinkmechanismus über einen Hydraulikzylinder (15) betätigt wird.

4. Schaltgetriebe nach Anspruch 3,
**dadurch gekennzeichnet, dass** der Einklinkmechanismus ein Mechanismus zum Verbinden und zum Lösen der Eingangswelle (3) mit bzw. von einer Ausgangswelle aufweist, die zumindest über einen Teil ihrer Länge konzentrisch zur Eingangswelle (3) ist.

5. Schaltgetriebe nach einem der Ansprüche 1 bis 4,
**dadurch gekennzeichnet, dass** die Hauptwelle (1) dazu bestimmt ist, sich drehende Flügel in Rotation zu versetzen oder zumindest einen Rotor, der beispielsweise Blätter (2) trägt.

6. Schaltgetriebe nach einem der Ansprüche 1 bis 5,
**dadurch gekennzeichnet, dass** jeder Übertragungszug n-Reduktionsstufen, ein einfaches freilaufendes Rad (11), ein freilaufendes Hauptrad (13) und n-1 freilaufende ausklinkbare Räder (7) aufweist, wobei n die Anzahl der verfügbaren Gänge beschreibt, das heißt eine ganze Zahl größer oder gleich 2.

7. Verfahren zum Schalten eines Schaltgetriebes gemäß einem der Ansprüche 1 bis 6 zum Ändern der Rotationsgeschwindigkeit einer Hauptwelle dieses Schaltgetriebes,
**dadurch gekennzeichnet, dass** es aus folgenden Schritten besteht:
- j1) Verringern der Drehgeschwindigkeit des linken Antriebsmotors (MG) ist zu einem Wert Ne1 ausgehend von einem Wert Ne, wobei der Wert Ne für die Drehgeschwindigkeit des rechten Antriebsmotors (MD) erhalten bleibt,
- j2) Auskuppeln des freien auskuppelbaren freien Rads (7) des linken Übertragungszuges (G),
- j3) Erhöhen der Drehgeschwindigkeit des linken Motors (MG) bis zum Wert Ne und Konstanthalten dieser Drehgeschwindigkeit,
- j4) Reduzieren der Drehgeschwindigkeit des rechten Motors (MD) bis auf einen Wert kleiner als Ne, zum Beispiel gleich Ne1,
- j5) Auskuppeln des freien auskuppelbaren Rades (7) des rechten Übertragungszuges (D),
- j6) Erhöhen der Drehgeschwindigkeit des rechten Motors (MD) bis auf den Wert Ne.

8. Verfahren zum Schalten eines Schaltgetriebes nach einem der Ansprüche 1 bis 6 zum Ändern der Drehgeschwindigkeit einer Hauptwelle des Schaltgetriebes, **dadurch gekennzeichnet, dass** es aus folgenden Schritten besteht:
- i1) Vermindern der Drehgeschwindigkeit des linken Motors (MG) bis auf einen Wert Ne1, ausgehend von einem Wert Ne, wobei der Wert Ne der Drehgeschwindigkeit des rechten Motors (MD) erhalten bleibt,
- i2) Auskoppeln des auskoppelbaren freien Rades (7) des linken Übertragungszuges (G),
- i3) Erhöhen der Drehgeschwindigkeit des linken Motors (MG) bis auf einen Wert Ne2, der größer ist als der Wert Ne,
- i4) Auskoppeln des freien auskoppelbaren Rades (7) des rechten Übertragungszuges (D),
- i5) und Vermindern der Drehgeschwindigkeit des linken Motors (MG) bis auf einen Wert Ne.

9. Schaltverfahren nach Anspruch 7 oder 8,
**dadurch gekennzeichnet, dass** die Schritte j1) bis j6) oder i1) bis i5) mit der Hilfe eines Rechners durchgeführt werden.

10. Antriebseinheit eines Drehflügelflugzeugs der Art eines Helikopters, mit einem Schaltgetriebe gemäß einem der Ansprüche 1 bis 6 und einer Motoreinheit (MG, MD) vom Typ Turbomotor oder Kolbenmotor, wobei jedem Übertragungszug ein solcher zugeordnet ist.

11. Helikopter oder Drehflügelflugzeug mit einem Schaltgetriebe gemäß einem der Ansprüche 1 bis 6.

12. Helikopter oder Drehflügelflugzeug mit einer Motoreinheit gemäß Anspruch 10.
